(19) **Europäisches Patentamt / European Patent Office / Office européen des brevets**

(11) **EP 0 923 051 B1**

(12) **FASCICULE DE BREVET EUROPEEN**

(45) Date de publication et mention
de la délivrance du brevet:
**21.03.2007 Bulletin 2007/12**

(51) Int Cl.:
*G06T 7/40* (2006.01)  *G06T 5/00* (2006.01)

(21) Numéro de dépôt: **98402778.9**

(22) Date de dépôt: **09.11.1998**

(54) **Méthode statistique multivariable pour caractériser des images que l'on à formées d'un milieu complexe tel que le sous-sol**

Multivariables statistisches Verfahren zum Charakterisieren von aus einem komplexen Medium wie eine Sub-Oberfläche gebildeten Bildern

Multivariable statistical method for characterising images built from a complex medium like the subsurface

(84) Etats contractants désignés:
**DK GB IT NL**

(30) Priorité: **10.12.1997 FR 9715742**

(43) Date de publication de la demande:
**16.06.1999 Bulletin 1999/24**

(73) Titulaire: **Institut Français du Pétrole**
**92852 Rueil-Malmaison Cedex (FR)**

(72) Inventeur: **Faraj, Abdelaziz**
**92500 Rueil-Malmaison (FR)**

(56) Documents cités:
- THEILER J ET AL: "A contiguity-enhanced k-means clustering algorithm for unsupervised multispectral image segmentation" ALGORITHMS, DEVICES, AND SYSTEMS FOR OPTICAL INFORMATION PROCESSING, SAN DIEGO, CA, USA, 28-29 JULY 1997, vol. 3159, pages 108-118, XP002075794 ISSN 0277-786X, Proceedings of the SPIE - The International Society for Optical Engineering, 1997, SPIE-Int. Soc. Opt. Eng, USA
- MOFFETT J L ET AL: "Probabilistic classification of forest structures by hierarchical modelling of the remote sensing process" STATISTICAL AND STOCHASTIC METHODS IN IMAGE PROCESSING II, SAN DIEGO, CA, USA, 31 JULY-1 AUG. 1997, vol. 3167, pages 118-129, XP002075795 ISSN 0277-786X, Proceedings of the SPIE - The International Society for Optical Engineering, 1997, SPIE-Int. Soc. Opt. Eng, USA

EP 0 923 051 B1

## Description

La présente invention concerne une méthode statistique multivariable pour caractériser des images que l'on a formées d'un milieu complexe tel que le sous-sol par exemple, de manière à faire apparaître les relations spatiales entre les éléments de la structure du milieu.

La méthode selon l'invention trouve des applications dans de nombreux domaines notamment pour caractériser au mieux l'imagerie sismique.

La méthode met en oeuvre une technique descriptive d'analyse de données dite de la contiguïté spatiale qui s'applique à des données spatiales ou reliées par un graphe de contiguïté telles que des données sismiques.

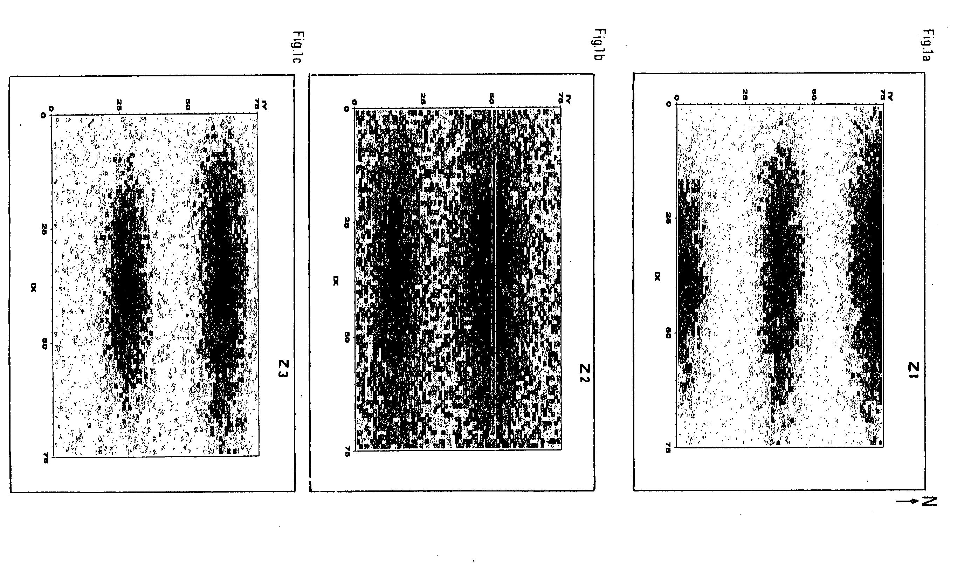

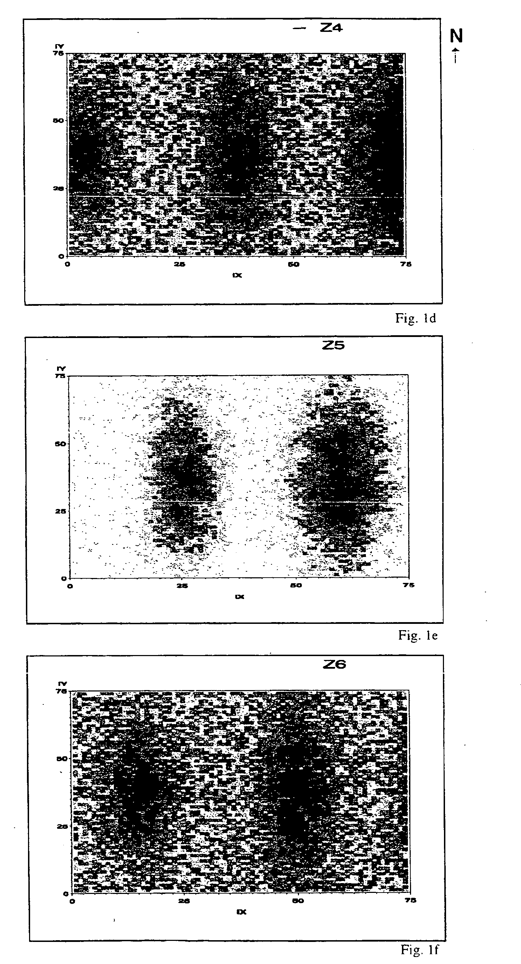

Les données analysées sont constituées d'une famille d'images telles que par exemple, les amplitudes des horizons d'un cube sismique 3D (Fig. 1a à 1e). Ces images présentent des structures spatiales gigognes à petite et grande échelles (micro et macro-structures) potentiellement liées à des phénomènes géologiques tels que des chenalisations, des réseaux de failles etc. ou à la propagation d'ondes avec formation de multiples par exemple, ou à des artefacts d'acquisition ou de traitement. Du bruit aléatoire peut être mélangé à ces structures.

On considère que les données à analyser sont spatiales du fait qu'elles se présentent sous l'aspect d'images formées de pixels répartis sur un plan, caractérisées par un certain nombre de mesures telles que des amplitudes relevées sur des portions de traces sismiques, des coefficients de réflexion sur des discontinuités, etc. que l'on considère en tant que variables statistiques. Il est alors primordial, pour rendre compte de l'ensemble des structures inhérentes à ces données, de prendre en considération à la fois les relations de contiguïté spatiale des données et leurs caractéristiques (géo)physiques.

## État de la technique

La technique connue d'analyse de la contiguïté spatiale (ACS) a fait l'objet de nombreuses publications notamment par :

- L. Lebart, 1969, Analyse statistique de la contiguïté, Pub. Ins. Stat., Paris VIII, 81-112.

Sous l'appellation d'analyse des proximités spatiales, la technique en cause a été appliquée notamment pour le filtrage de données sismiques comme décrit par :

- Royer, J. J., 1984, Proximity Analysis: a Method for Geodata Processing, in Sciences de la Terre, n 20, Proc. of the Int. Coll.: Computers in Earth Sciences for Natural Ressources Characterization, April 9-13, Nancy, France; ou par

- Faraj, A.,1994, Application of Spatial Contiguity Analysis to Seismic Data Filtering. In SEG - 64th Annual International SEG Meeting, Los Angeles, Oct. 23-28 1994, Expanded abstracts, vol.l, Paper SP5.7, 15841587.

Elle consiste essentiellement à calculer une famille de composantes combinaisons linéaires des variables initiales qui minimisent le coefficient de contiguïté dit de Geary définissant le rapport de la variabilité spatiale à la variance.

Les composantes (appelées composantes spatiales) correspondent aux vecteurs propres de la matrice $C^{-1} \Gamma$ (h) où C est la matrice de variance-covariance des données initiales et $\Gamma$(h) celle des variogrammes-variogrammes croisés à la distance spatiale h. Les composantes spatiales sont habituellement ordonnées par ordre décroissant des valeurs propres de cette matrice.

On considère généralement que les premières composantes (associées aux faibles valeurs propres) et appelées composantes régionales, mettent en évidence les structures spatiales à grande échelle. Les dernières composantes spatiales (associées aux fortes valeurs propres) appelées composantes locales, traduisent les structures spatiales à faible échelle.

On considère également que l'information "portée" par ces différentes composantes est mesurée par les valeurs propres associées.

La méthodologie suivie pour l'analyse de la contiguïté spatiale est calquée directement sur celle plus connue d'analyse en composantes principales (ACP). Or on a vérifié, que les valeurs propres de la matrice $C^{-1}\Gamma$(h) sont de piètres mesures de la variance locale pour caractériser et ordonner les composantes spatiales. En effet, lors de certaines analyses effectuées, les composantes associées aux plus grandes valeurs propres sont complètement dépourvues de sens (bruit aléatoire par exemple) alors que celles correspondant à des valeurs propres intermédiaires semblent mieux rendre compte (au moins visuellement) de l'information aussi bien statistique que spatiale des variables initiales.

En réalité, bien que calculées à partir des matrices C et $\Gamma$(h) qui intègrent les interdépendances à la fois statistiques et spatiales des données et quoique mesurant les rapports de contiguïté des composantes factorielles, les valeurs propres représentent chacune une information isolée (rapport de la variance locale sur la variance globale) spécifique à la composante spatiale. La valeur propre est un critère qui n'est bon que pour mesurer la variabilité spatiale de la composante spatiale. À l'inverse de l'analyse en composantes principales (ACP), par exemple, où les valeurs propres (celles de C) représentent la part de la variance totale des données expliquée par la composante, la somme des valeurs propres obtenue dans le cadre de l'ACS, égale à $\mathrm{tr}[C^{-1}\Gamma(h)]$ n'a pas de signification. Par contre, obtenir tr $[\Gamma(h)]$ est bien préférable car cela représente la somme des variances locales des variables initiales. De ce fait, il apparaît nécessaire de définir de nouveaux critères pour quantifier les informations statistiques et spatiales portées par les composantes spatiales de l'ACS.

**Définition de la méthode selon l'invention**

Il s'agit d'une méthode statistique multivariable pour analyser des données spatiales associées (directement ou indirectement) à des éléments d'images, lesdites données étant constituées par des mesures considérées comme des variables statistiques et présentant des structures spatiales traduisant des événements d'un milieu complexe tel que le sous-sol, ces données étant obtenues par une exploration du milieu (au moyen d'ondes sismiques par exemple), de manière à identifier et extraire les structures spatiales des données. La méthode comporte les étapes suivantes :

on effectue une analyse spatiale des données à l'aide d'une étude variographique pour déterminer, dans plusieurs directions de l'espace, au moins des distances spatiales (h) caractérisant la variabilité spatiale des variables statistiques ;

on réalise une analyse de la contiguïté spatiale consistant à déterminer une décomposition des données en composantes spatiales consistant en des combinaisons linéaires de variables statistiques qui possèdent, à la fois, une variabilité spatiale minimale et une variance maximale;

on sélectionne les composantes spatiales les plus significatives en prenant en compte leurs contributions respectives à la variabilité spatiale des données et à la variance des données ; et

on réalise un filtrage des variables statistiques à partir des composantes spatiales sélectionnées pour extraire au moins une structure spatiale.

La sélection des composantes spatiales peut être effectuée en déterminant, parmi toutes les composantes spatiales, des composantes spatiales locales à partir de leur contribution à la variabilité spatiale des données, pour rendre compte de la structure des données à petite échelle, et des composantes spatiales régionales à partir de leur contribution à la variance des données, pour rendre compte de la structure des données à grande échelle.

Selon l'invention on peut déterminer les composantes spatiales locales en classant les composantes spatiales par ordre décroissant de leur contribution à la variabilité spatiale des données, et on peut déterminer les composantes spatiales régionales en classant les composantes spatiales par ordre décroissant de leur contribution à la variance des données.

Cette sélection de composantes spatiale peut être réalisée de façon graphique.

On peut, à l'aide du filtrage, enlever un bruit (généralement présent sur les images) et éliminer ou conserver au moins une structure spatiale.

Selon l'invention, on peut choisir la décomposition en composantse spatiales pour laquelle les combinaisons linéaires des variables statistiques minimisent un coefficient de contiguïté défini comme le rapport de la variabilité spatiale à la variance.

On caractérise la structure spatiale des données par exemple par une analyse monovariable ou bivariable de différents variogrammes des éléments d'image. Ces analyses peuvent permettre de déterminer au moins l'une des propriétés spatiales suivantes : l'organisation spatiale des éléments à différentes échelles, l'importance d'un bruit aléatoire dans les images, l'existence éventuelle de structures périodiques

La méthode permet non seulement une identification des structures spatiales mais aussi une quantification de l'information filtrée en termes de variance et de variabilité spatiale.

La méthode peut s'appliquer d'une façon générale à l'analyse de toutes données spatiales à répartition régulière ou irrégulière.

D'autres caractéristiques et avantages de la méthode selon l'invention vont apparaître à la lecture de la description ci-après qui comporte deux parties, la première portant sur les grandes lignes de la méthode, la deuxième, sur l'appareillage statistique mis en oeuvre pour réaliser les différentes étapes de l'analyse, et en se référant aux dessins annexés où :

- les Fig. 1a à 1f montrent les images de six horizons Z1 à Z6 d'un bloc sismique;

- les Fig.2a à 2h montrent les courbes de variogramme de six images Z1 à Z6 du bloc choisies dans huit directions;

- les Fig.3a, 3b montrent deux diagrammes des contributions des composantes spatiales CS respectivement à la variabilité spatiale (VS) et à la variance (V) des données;

- les Fig.4a à 4f montrent respectivement les composantes spatiales (F1-F6) de différentes structures;

- les Fig.5a à 5e montrent des représentations des variables initiales sur des cercles des corrélations associé à cinq plans factoriels (de PF(1,2) à PF(5,6));

- les Fig.6a à 6e montrent des représentations des variables initiales sur des cercles des contributions associé au plan factoriel (PF(1,2) à PF(5,6));

- les Fig.7a à 7f montrent sur les images initiales Z1 à Z6, la structure composante F5-F6 correspondant à la structure spatiale Est-Ouest; er

- les Fig.8a à 8f montrent le bruit aléatoire sur les images Z1 à Z6 initiales.

## I Description détaillée de la méthode selon l'invention:

La méthode s'applique aux données associées aux différents éléments d'images que l'on a obtenues par une exploration sismique du sous-sol par exemple et qu'il s'agit d'analyser pour faire mieux ressortir les rapports de contiguïté spatiale qu'il y a entre eux. Ces images sont par exemple, extraites à partir des horizons ou des sections sismiques d'un "cube sismique" 3D. Elle comporte essentiellement trois étapes successives.

## I-1) Analyse spatiale

Appelée étude variographique, cette étape préliminaire consiste à faire une analyse spatiale des données, soit monovariable (une variable à la fois), soit bivariable (i.e. en prenant les variables deux à deux). C'est au cours de cette étape que l'on met en évidence les propriétés spatiales des variables initiales dans les différentes directions: leur organisation spatiale à différentes échelles, l'importance respective du bruit aléatoire dans les différentes images l'existence éventuelle de structures périodiques etc.
L'analyse variographique monovariable des données (ou variables initiales) consiste à analyser les courbes des variogrammes et des autocorrélations, les variogrammes et autocorrélogrammes surfaciques associés à chacune des variables initiales et à les comparer les unes aux autres pour dégager des comportements spatiaux particuliers.
L'analyse variographique bivariable des données consiste à analyser les courbes des variogrammes croisés et des intercorrélations, les variogrammes croisés et intercorrélogrammes surfaciques associés aux variables initiales prises deux à deux, pour dégager les corrélations spatiales des variables les unes avec les autres.
Cette étude variographique (mono ou bivariable) est prioritairement une phase descriptive où il est moins question de modéliser les courbes de variogrammes que de classifier les variables initiales en groupes homogènes de comportement spatial. Les différents outils variographiques cités: variogrammes, variogrammes croisés, autocorrélations et intercorrélations directionnels ou surfaciques, sont calculés et visualisés pour toute la famille des variables analysées. Cette étude variographique peut mettre en évidence des distances spatiales pertinentes.

## I-2) Application de l'analyse de contiguïté spatiale (ACS)

Cette préparation préalable étant effectuée, on effectue dans un deuxième temps une ou plusieurs analyses de la contiguïté spatiale sur les données, dans le but de trouver leur meilleure décomposition en structures spatiales orthogonales. C'est au cours de cette étape que l'utilisateur a la possibilité d'exploiter les outils d'aide à l'interprétation des données et des résultats que nous mettons à sa disposition.
Une ou plusieurs analyses sont appliquées aux données. L'utilisateur est orienté pour la mise en oeuvre de ces analyses, par les distances spatiales dégagées lors de l'analyse variographique préalable.

## Diagrammes

La pertinence des composantes spatiales issues d'une analyse donnée est indiquée par deux diagrammes : celui des contributions des composantes spatiales à la variabilité spatiale des données et celui des contributions des composantes spatiales à la variance des données. Ces deux diagrammes montrent la distribution des deux critères en question (contributions à la variabilité spatiale définies plus loin (cf. relation (**17**)) et contributions à la variance: cf. relation (**19**)) pour l'ensemble des composantes spatiales d'une analyse. Ces diagrammes permettent de sélectionner les composantes les plus significatives au sens de la variabilité spatiale ou de la variance.

Les composantes spatiales sont rangées suivant les deux ordres suivants :

1- par ordre décroissant de leur contribution à la variabilité spatiale des données (cf. relation (**20**)). On désigne par composantes spatiales locales, les premières composantes de cet ordre car elles rendent compte de la structure des données à petite échelle.

2- par ordre décroissant de leur contribution à la variance des données (cf. relation (**21**)). On désigne par composantes spatiales régionales, les premières composantes de cet ordre, car elles rendent compte de la structure des données à grande échelle.

Graphiques:

Pour analyser les variables initiales en relation avec les composantes spatiales, deux représentations des variables sont possibles et complémentaires :

1- Celles des contributions signées des composantes spatiales à la variabilité spatiale des variables initiales. (cf. relation (**15**)). De telles valeurs, comprises entre 1 et +1, donnent lieu à des cercles (appelées cercles des contributions à la variabilité spatiale) à l'intérieur desquels les variables initiales sont représentées par des points.

2- Celles des contributions signées des composantes spatiales à la variance des variables initiales (cf. relation (**18**)). De telles valeurs, comprises entre -1 et +1, donnent lieu à des cercles (appelés cercles des contributions à la variance) à l'intérieur desquels les variables initiales sont représentées par des points.

Ces deux représentations graphiques complémentaires permettent d'interpréter les variables initiales en relation avec les structures spatiales mises en évidence par les composantes.

On peut aussi utiliser ces représentations graphiques (cercles des corrélations et des contributions) pour placer à côté des variables actives, des variables supplémentaires, c'est-à-dire des variables qui, contrairement à elles, n'entrent pas en jeu pour l'identification des composantes spatiales, ceci grâce à leurs contributions signées ( cf. relations (**15**) et (**18**)). Il peut s'agir par exemple d'un attribut sismique que l'utilisateur désire positionner durant l'analyse, par rapport aux attributs sismiques qui interviennent dans l'analyse.

**I-3 Filtrage des variables**

L'étape finale est celle du filtrage des variables initiales ou des variables non prises en compte pour l'identification des composantes spatiales, où l'utilisateur a la possibilité d'extraire la ou les structures qu'il juge pertinentes à la lumière des outils d'aide et de son expertise dans le domaine.

Cette étape consiste à enlever le bruit et à éliminer ou à conserver une ou plusieurs structures spatiales identifiées. Le résultat est une image initiale débruitée ou ne contenant que la structure (locale ou régionale) jugée comme géologiquement pertinente par l'utilisateur. Un tel filtrage n'est pas unique: il dépend des composantes locales ou régionales décidées comme telles par l'utilisateur.

Ce filtrage peut être appliqué aussi bien aux variables initiales qu'à des variables n'ayant pas participé aux calculs. L'utilisateur peut positionner ces variables par rapport aux structures spatiales mises en évidence par élimination ou extraction de ces structures.

**I-4 Quantification des structures filtrées**

La méthode selon l'invention offre à l'utilisateur une quantification des structures spatiales éliminées ou extraites des variables (aussi bien actives que supplémentaires) à la fois en termes de variabilité spatiale que de variance, car les mesures obtenues par les relations (**22**) ou (**23**) sont des pourcentages.

**II Description analytique des moyens d'analyse statistique mis en oeuvre**

Rappel: Pour la bonne compréhension de ce qui va suivre, on rappelle tout d'abord les notions et notations connues des hommes de l'art.

On considère n objets (i = 1 à n) localisés aux points $x_i$ sur un plan de position et décrits par J variables $\mathbf{Z}^j$ (j = 1 à J) de sorte que $Z_i^j$ soit la mesure de la variable $\mathbf{Z}^j$ sur l'objet i. $Z = [Z_i^j]$ est la matrice des données.

En analyse des données classique on considère de telles données en tant que variables (au sens statistique) définies sur un ensemble d'individus. Les n mesures $Z_i^J$ sont des réalisations indépendantes de la variable aléatoire $\mathbf{Z}^j$. Cette représentation ôte tout caractère spatial aux données.

Il est d'usage, en géostatistique, de représenter de telles données par un ensemble de variables régionalisées (V.R.) considérées comme des réalisations d'une famille $\mathbf{Z}(x)=\{\mathbf{Z}^j(x); j =1, ..., J\}$ de fonctions aléatoires du point x. (i.e. $\mathbf{Z}(x)$ est une fonction aléatoire vectorielle à valeurs dans $\mathbf{R}^J$). Ainsi $Z^j(X_i)$ - que l'on notera $Z_i^{\cdot j}$ - est une réalisation de la fonction aléatoire $\mathbf{Z}^j(x)$ du point x. De cette façon, les n mesures multidimensionnelles $\left(Z^1(x_i), Z^2(x_i), ..., Z^J(x_i)\right)$ sont des réalisations de n vecteurs aléatoires différents situés aux points $x_i$, du plan de position.

Le terme "régionalisé" a été proposé pour qualifier un phénomène se déployant dans l'espace et y présentant une certaine structure. Une variable régionalisée est considérée comme étant une fonction irrégulière du point x du fait qu'elle révèle deux aspects contradictoires :

- l'un, structuré, associé à une organisation spatiale à plus ou moins grande échelle,

- l'autre, local, faisant apparaître les irrégularités à plus petite échelle, imprévisibles d'un point à un autre.

Entre ces deux aspects extrêmes du signal, d'autres structures existent décrivant des organisations spatiales des données à des échelles intermédiaires. C'est l'ensemble de toutes ces structures que l'on propose de décrire, dans un premier temps, grâce aux outils géostatistiques.

Ces structures, vu l'aspect multidimensionnel des données, peuvent être redondantes dans la mesure où elles seraient communes aux J variables initiales. Une fois mises en évidence, elles peuvent servir pour effectuer une typologie statistique et spatiale de ces variables.

**II-1 Mise en oeuvre de l'analyse spatiale**

On se fixe une direction sur le plan de position des données et on considère une distance dans cette direction. Nous désignerons par h à la fois cette distance (qui est un scalaire) et le vecteur (de dimensions 2) défini par la direction et la longueur h. On notera

$$\Delta\mathbf{Z}(h) = \mathbf{Z}(x + h) - \mathbf{Z}(x) \qquad (1)$$

l'accroissement multivariable de $\mathbf{Z}$ entre les points x et x+h séparés par la distance h dans la direction préalablement fixée.

$\mathbf{Z}$ est supposée stationnaire d'ordre 2 ; ce qui signifie que l'accroissement $\Delta\mathbf{Z}(h)$ est de moyenne nulle - i.e. E$[\Delta\mathbf{Z}(h)]=0$ - et de variance E$[\Delta\mathbf{Z}(h)^2]$ constante ne dépendant que de h. Dans ces conditions, on définit la matrice des variogrammes-variogrammes croisés $\Gamma_{ZZ}(h)$ comme étant la matrice de variances-covariances des accroissements $\Delta\mathbf{Z}(h)$ :

$$\Gamma_{ZZ}(h) = \frac{1}{2}E\left[\Delta\mathbf{Z}(h)^t \cdot \Delta\mathbf{Z}(h)\right] = \frac{1}{2}C_{\Delta Z(h)\Delta Z(h)} \qquad (2)$$

où $C_{\Delta Z(h)\Delta Z(h)}$ est la matrice de variances-covariances associées aux colonnes de $\Delta\mathbf{Z}(h)$.

$\Gamma_{ZZ}(h)$ est une matrice de dimension JxJ de terme général :

$$\gamma_{jj'}(h) = \frac{1}{2} E\left[(\mathbf{Z}^j(x+h) - \mathbf{Z}^j(x)).(\mathbf{Z}^{j'}(x+h) - \mathbf{Z}^{j'}(x))\right] \qquad (3)$$

La direction sur le plan de position des données étant fixée, le terme diagonal de $\Gamma_{ZZ}(h)$ désigne alors le semi-variogramme de $\mathbf{Z}^j$ dont la valeur mesure la variabilité spatiale de $\mathbf{Z}^j$ à la distance h. Le variogramme expérimental est utilisé en tant que courbe dépendant de la distance h. Il pourrait encore s'écrire sous la forme

$$\gamma_j(h) = \gamma_{jj}(h) = \frac{1}{2m(h)} \sum_{d(i.i')=h} (Z_i^j - Z_{i'}^j)^2 \qquad (4)$$

où m(h) est le nombre de paires formées d'individus spatialement distants de h.

Le terme $\gamma_{jj'}(h)$ désigne, d'une certaine façon, la covariance locale entre les variables j et j' si nous considérons comme graphe de contiguïté associé celui qui relie les paires formées de points à la distance h l'un de l'autre et disposés dans la direction du vecteur h.

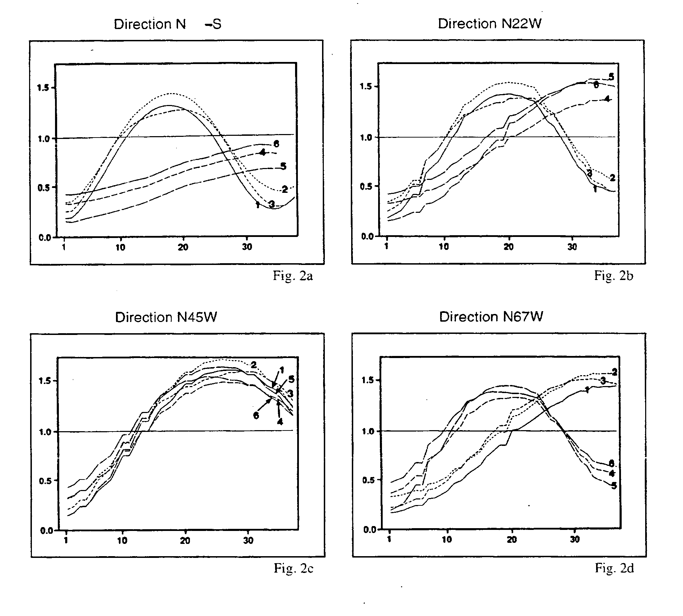

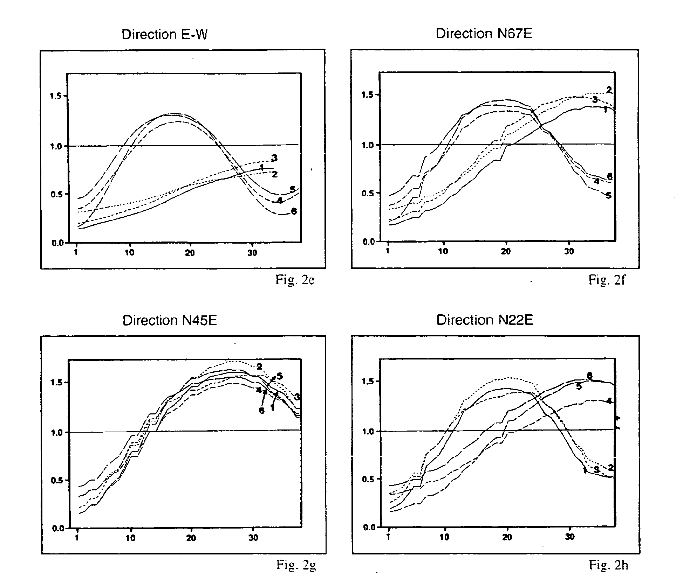

De même $\gamma_j(h)$, terme de variance locale de la variable j, représente une restriction de la variance de cette variable uniquement calculée pour les paires de points distants de h. Elle représente les fluctuations spatiales associées à cette distance. Considérée comme une courbe dépendant de h, la forme de $\gamma_j$ (Fig.2) renseigne sur le comportement spatial de la variable $\mathbf{Z}^j$ pour les différentes valeurs de h.

Le but d'une étude variographique classique est de modéliser les variogrammes expérimentaux à l'aide de modèles théoriques de base sphériques, ou exponentiels. Elle a aussi l'avantage, d'un point de vue pratique, de mettre en évidence les structures spatiales imbriquées d'une variable régionalisée. Un exemple d'une telle étude variographique est décrit par exemple par :

- Isaaks, E. H., Srivastava, R. M.,1989, Applied Geostatistics, Oxford University Press, Oxford.

Dans le cadre de la présente méthode, on cherche plutôt à mettre en évidence des groupes de comportement spatial en comparant les variogrammes des J variables les uns aux autres dans le but de révéler des familles de structure spatiale et de déterminer la (ou les) distance(s) convenable(s) pour la mise en oeuvre de l'ACS.

## II-2. Mise en oeuvre de l'analyse de contiguïté spatiale (ACS)

L'analyse de la contiguïté spatiale (ACS) permet, dans un deuxième temps, de mettre en évidence les structures spatiales, de les interpréter et les filtrer éventuellement. On va chercher en définitive à "capturer" de telles structures par les composantes factorielles de l'ACS.

La distance spatiale h entre individus ou objets étant fixée dans une direction donnée, il s'agit de déterminer une variable f dépendant de h

$$f = \mathbf{Z}u = \sum_j u_j \mathbf{Z}^j \qquad (5)$$

qui est une combinaison linéaire des variables $\mathbf{Z}^j$ initiales dont le rapport de contiguïté spatiale pour le pas h est minimal. Cette variable est celle qui réalise le minimum de l'expression :

$$\frac{\gamma_f(h)}{\sigma_f^2} = \frac{u'\Gamma_{ZZ}(h)u}{u'C_{ZZ}u} \qquad (6)$$

i.e. qui possède, à la fois, une variabilité spatiale minimale et une variance maximale. Dans cette expression, $C_{ZZ}$ désigne la matrice des variances-covariances des données.

Il existe J variables $f^1$, ..., $f^\alpha$, ..., $f^J$ solutions de ce problème (appelées composantes spatiales) correspondant aux vecteurs propres $u^1$, ..., $u^\alpha$, ..., $u^J$ de la matrice $C_{ZZ}^{-1}\Gamma_{ZZ}(h)$ - où $u^\alpha = (u_1^\alpha, u_2^\alpha, ..., u_J^\alpha)' \in \mathbf{R}^J$ - ordonnés par valeurs propres croissantes :

$$\lambda_1 \leq ... \leq \lambda_\alpha \leq ... \leq \lambda_J \qquad (7)$$

$\lambda_\alpha$ mesure le rapport de contiguïté de Geary $\dfrac{\gamma_\alpha(h)}{\sigma^2(f)}$ (connu des spécialistes) de la $\alpha^{ème}$ composante factorielle.

C'est dans cet ordre que sont usuellement présentées les composantes d'une analyse factorielle classique, mettant en avant l'information principale des données (au sens du critère optimisé). De cette manière, la plus grande part de la dite information est portée par les premières composantes. Ceci établit un parallèle entre les composantes de l'ACS (structures à grande échelle sur les premières composantes et microstructures ou bruit aléatoire sur les dernières) et celles, par exemple, de l'analyse en composantes principales (plus grande variance sur les premières composantes et bruit aléatoire sur les dernières).

**Propriétés statistiques et spatiales des composantes spatiales de l'ACS**

Le coefficient de Geary $\dfrac{\gamma_\alpha(h)}{\sigma^2(f)}$ combine deux critères : l'un spatial au numérateur et l'autre algébrique (ou statistique) au dénominateur permettant ainsi de calculer des composantes factorielles de variance maximale et de variabilité spatiale minimale. Ces composantes ont la propriété de former une base à la fois statistiquement et spatialement orthogonale, cette deuxième propriété ne semble pas avoir été exploitée par les différents auteurs ayant travaillé sur le sujet. Et c'est justement cette propriété qui permet de construire des outils d'interprétation des résultats.

Soit $F = \left[f_i^\alpha\right]_{i=1,n}^{\alpha=1,J}$ le tableau rectangulaire des mesures des **J** composantes factorielles de l'ACS (en colonnes) sur les n individus (en lignes).

Les variables initiales étant centrées, les composantes factorielles le sont aussi. On montre que la matrice $C_{FF}$ de variances-covariances de F s'écrit :

$$C_{FF} = F^t\, F = I_J \qquad (8)$$

où $I_J$ est la matrice identité JxJ. La matrice des variances-covariances locales (variogrammes-variogrammes croisés) associée aux composantes factorielles s'écrit :

$$\Gamma_{FF}(h) = \Lambda \qquad (9)$$

où $\Lambda$ est la matrice diagonale des valeurs propres $(\lambda_\alpha)_{\alpha=1, ..., J}$.

Autrement dit, le coefficient de corrélations de deux composantes $f^\alpha$ et $f^\beta$ s'écrit :

$$\text{cor}(f^\alpha, f^\beta) = \begin{cases} 1 \text{ si } \alpha=\beta \\ 0 \text{ sinon,} \end{cases} \qquad (10)$$

et leur variogramme croisé :

$$\gamma_{f^{\alpha}f^{\beta}}(h) = \begin{cases} \lambda_{\alpha} \ \text{si} \ \alpha=\beta \\ 0 \ \ \text{sinon} \end{cases} \qquad\qquad (11)$$

Les composantes spatiales sont donc orthonormées. De plus leurs variances locales - valeurs de leurs variogrammes pour la distance h - sont égales aux valeurs propres de l'analyse. Leurs covariances locales - valeurs de leurs variogrammes croisés pour la distance h - sont nulles deux à deux. Elles sont donc spatialement indépendantes. De ceci, on peut déduire des relations intéressantes concernant la décomposition de la matrice des variances-covariances locales - variogrammes-variogrammes croisés - des variables initiales. On peut montrer que son terme général s'écrit sous la forme :

$$\gamma_{jj'}(h) = \sum_{\alpha} \text{cor}(\mathbf{Z}^j, f^{\alpha}) \, \text{cor}(\mathbf{Z}^{j'}, f^{\alpha}) \, \lambda_{\alpha} \qquad\qquad (12)$$

et plus particulièrement le variogramme de la variable $\mathbf{Z}^j$ :

$$\gamma_j(h) = \sum_{\alpha} \text{cor}^2(\mathbf{Z}^j, f^{\alpha}) \, \lambda_{\alpha} \qquad\qquad (13)$$

Et comme $\sum_{\alpha} \text{cor}^2(\mathbf{Z}^j, f^{\alpha}) = 1$, la variance locale (valeur du variogramme pour la distance h) d'une variable régionalisée $\mathbf{Z}^j$ s'écrit comme une moyenne pondérée par $\text{cor}^2(\mathbf{Z}^j, f^{\alpha})$ des variances locales (valeurs des variogrammes pour la distance h) des composantes spatiales $f^{\alpha}$ de l'ACS.

De façon générale, la matrice des variances-covariances locales - variogrammes-variogrammes croisés -, compte tenu de la relation 13, se met sous la forme

$$\Gamma_{ZZ}(h) = C_{FZ}^t \Lambda C_{FZ} \qquad\qquad (14)$$

où $\Lambda$ est la matrice diagonale des valeurs propres de $C_{ZZ}^{-1} \Gamma_{ZZ}(h)$ et $C_{FZ}$ celle des covariances entre les composantes factorielles $f^{\alpha}$ (en lignes) et les variables initiales $\mathbf{Z}^j$ (en colonnes).

## II.3. Outils d'aide à l'interprétation des résultats d'une ACS

Dans ce qui suit, on suppose que l'analyse ACS a été appliquée pour un vecteur h fixé du plan de position des données. Ainsi tous les résultats (valeurs propres $\lambda_{\alpha}$, composantes factorielles $f^{\alpha}$, etc.) de l'ACS dépendent de ce vecteur h.

L'écriture de $\gamma_j(h)$ dans (13) montre que l'expression que nous définissons comme suit :

$$\text{cnt}(\mathbf{Z}^j, f^{\alpha}) = \text{cor}(\mathbf{Z}^j, f^{\alpha}) . \left| \text{cor}(\mathbf{Z}^j, f^{\alpha}) \right| \frac{\lambda_{\alpha}}{\gamma_j(h)} \qquad\qquad (15)$$

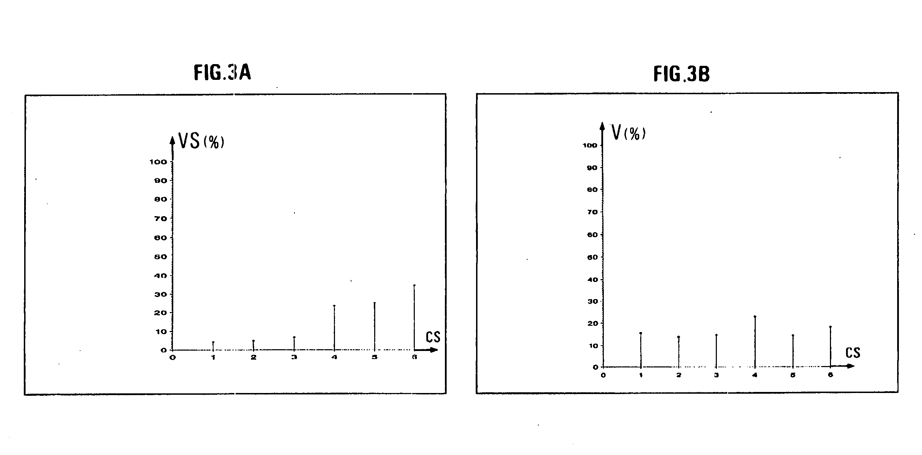

varie entre -1 et 1. Elle mesure la contribution signée de la $\alpha^{\text{ème}}$ composante factorielle à la structure (ou variabilité) spatiale de la variable $\mathbf{Z}^j$. Une telle définition permet d'avoir des valeurs aussi bien négatives que positives de la contribution, lui conférant ainsi un rôle identique à celui de la corrélation. De cette façon, il est profitable de représenter les variables initiales sur des cercles que l'on appelle cercles de contributions (cercle de rayon 1, Fig.3) dont l'utilisation est identique à celle des cercles de corrélations (Fig.2) employés dans l'analyse en composantes principales.

On notera que, pour toute variable $\mathbf{Z}^j$

$$\sum_{\alpha=1}^{J} \left| \text{cnt}(\mathbf{Z}^j, f^\alpha) \right| = 1 \qquad (16)$$

De fait, si $|\text{cnt}(Z^j, f^\alpha)| \approx 1$, on dira que la composante $f^\alpha$ contribue fortement à la variance locale (ou variabilité spatiale) de la variable $\mathbf{Z}^j$.

Le cercle des contributions spatiales permet de faire la typologie des variables initiales avec une meilleure précision.

Par ailleurs, on définit :

$$\text{cnt}(f^\alpha) = \frac{\sum_{j=1}^{J} \text{cor}^2(Z^j, f^\alpha)\lambda_\alpha}{\sum_{j=1}^{J} \gamma_j(h)} = \frac{\sum_{j} \left| \text{cnt}(Z^j, f^\alpha) \right| \gamma_j(h)}{\sum_{j} \gamma_j(h)} \qquad (17)$$

Cette expression qui varie entre 0 et 1, mesure la contribution de la $\alpha^{\text{ème}}$ composante factorielle à la structure (ou variabilité) spatiale des données. Cette contribution est d'autant plus élevée que $\text{cnt}(f^\alpha) \approx 1$. Au dénominateur du second terme de la relation (17) $\sum_{j=1}^{J} \gamma_j(h) = \text{trace}[\Gamma_{zz}(h)]$ représente la variance locale totale des données. Le numérateur du troisième terme de l'expression (**17**) montre que la contribution d'une composante spatiale à la variabilité spatiale des données est une somme des variances locales des variables initiales pondérées par les contributions absolues $|\text{cnt}(Z^j, f^\alpha)|$ de la composante à la variabilité spatiale des variables. Ainsi la structure spatiale d'une variable est d'autant plus marquante que la valeur de $\text{cnt}(Z^j, f^\alpha)$ est élevée en valeur absolue.

Le premier indice $\text{cnt}(\mathbf{Z}^j, f^\alpha)$ est utile, d'une part, pour l'interprétation des composantes factorielles en fonction des variables initiales et, d'autre part, pour la typologie de ces dernières. Une variable $\mathbf{Z}^j$ qui, d'un point de vue spatial, est la plus ressemblante à la composante $f^\alpha$, est celle pour laquelle la valeur de $|\text{cnt}(\mathbf{Z}^j, f^\alpha)|$ est proche de 1. Un tel résultat est visualisé - comme nous venons de le voir - par l'intermédiaire du cercle des contributions en représentant les variables initiales sur un plan factoriel $(f^\alpha, f^\beta)$ par leurs coordonnées $\text{cnt}(\mathbf{Z}^j, f^\alpha)$ et $\text{cnt}(\mathbf{Z}^j, f^\beta)$.

Le deuxième indice $\text{cnt}(f^\alpha)$ est une mesure globale de la variabilité spatiale que chaque composante restitue. C'est un descripteur de l'information spatiale portée par les structures mises en évidence. Ce critère est utile comme on le verra plus loin, pour sélectionner les composantes les plus significatives. C'est sur la base de ce critère, et non plus les valeurs propres, que l'on ordonne les composantes factorielles par contributions spatiales décroissantes. Ces indices ne sont cependant pas suffisants pour décrire globalement les données. Ils ne tiennent pas compte de la variance des données qui est indispensable pour mesurer la part de l'information statistique restituée par les composantes.

Pour cette raison on retient l'indice suivant :

$$\text{cntV}(\mathbf{Z}^j, f^\alpha) = \text{cor}(\mathbf{Z}^j, f^\alpha) . \left| \text{cor}(\mathbf{Z}^j, f^\alpha) \right| \qquad (18)$$

qui varie entre -1 et 1 et mesure la contribution signée de la $\alpha^{\text{ème}}$ composante factorielle à la variance de la variable $\mathbf{Z}^j$.

La définition d'un tel indice découle du fait que $\sum_{\alpha=1}^{J} \text{cor}^2(Z^j, f^\alpha) = 1$ car les variables initiales sont centrées et réduites.

Plus généralement, l'indice

$$cntV(f^{\alpha}) = \frac{\sum_j cor^2(\mathbf{Z}^j, f^{\alpha}).\sigma_j^2}{\sum_j \sigma_j^2} = \frac{\sum_j |cntV(Z^j, f^{\alpha})|.\sigma_j^2}{\sum_j \sigma_j^2} \qquad (19)$$

variant entre 0 et 1, mesure la contribution de la $\alpha^{ème}$ composante factorielle à la variance des données. De cette façon on a, pour chaque composante, la mesure de la part de variance des données qu'elle explique. Dans la relation (**19**), le dénominateur $\sum_j \sigma_j^2 = trace[C_{ZZ}]$ du second terme représente la variance totale des données.

défaut des valeurs propres directement disponibles en ACP, les valeurs de $cntV(f^{\alpha})$ renseignent sur la part de variance portée par les composantes spatiales issues de l'ACS. Plus $cntV(f^{\alpha})$ est élevée plus $f^{\alpha}$ pourrait être assimilable à une composante principale de l'ACP (forte variance expliquée). Dans la pratique il y a une forte corrélation entre la première composante $g^1$ de l'ACP et la composante de l'ACS pour laquelle $cntV(g^1) = \sigma_{g^1}^2$. On montre d'ailleurs,

que $cnt(g^{\alpha}) = \dfrac{\sigma_{g^{\alpha}}^2}{\sum\limits_{\alpha=1}^{J} \sigma_{g^{\alpha}}^2}$, pourcentage de l'inertie expliquée par la $\alpha$ième composante principale $g^{\alpha}$ de l'ACP.

Par ailleurs, plus $cnt(f^{\alpha})$ est élevée plus la composante traduit une forte variabilité spatiale des données. Il est utile, par conséquent, de ranger les composantes $f^{\alpha}$ de l'ACS, d'une part, par ordre décroissant des $cnt(f^{\alpha})$, soit:

$$cnt(f^{\beta(1)}) \geq cnt(f^{\beta(2)}) \geq ... \geq cnt(f^{\beta(J)}) \qquad (20)$$

et, d'autre part, par ordre décroissant des $cntV(f^{\alpha})$, soit :

$$cntV(f^{\alpha(1)}) \geq cntV(f^{\alpha(2)}) \geq ... \geq cntV(f^{\alpha(J)}) \qquad (21)$$

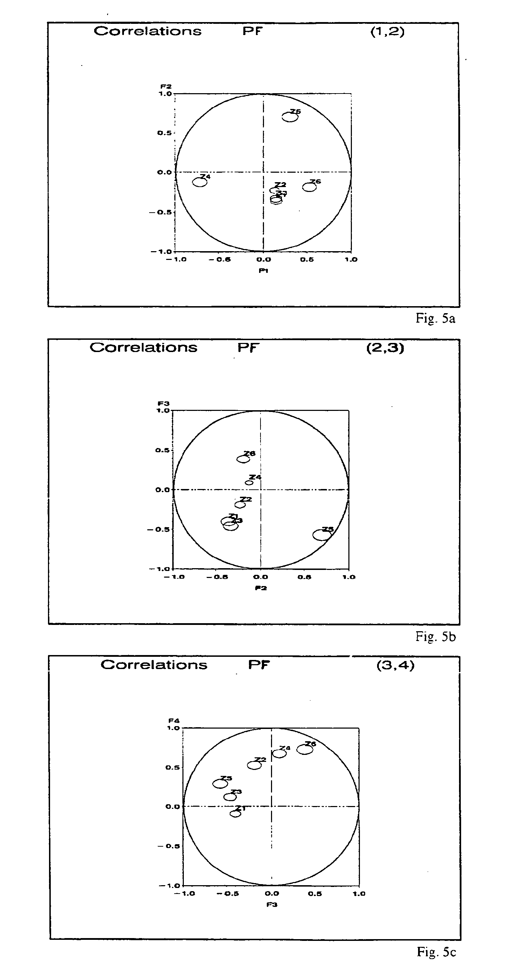

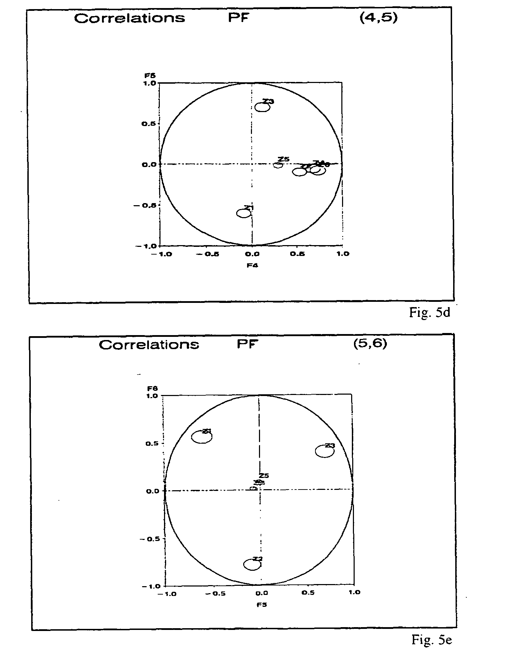

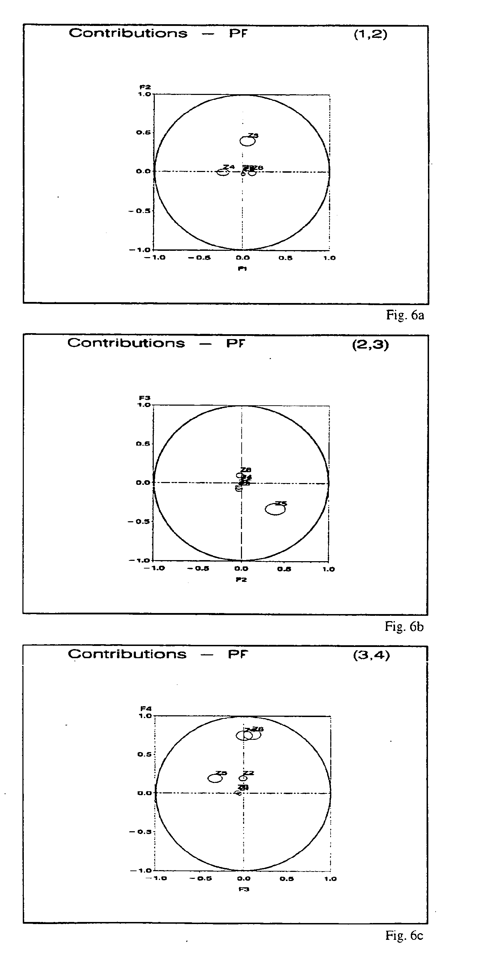

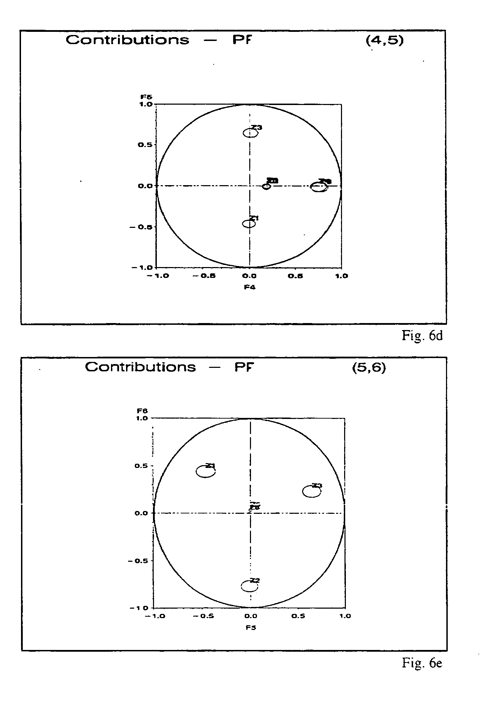

On voit sur les Fig.5 et 6 les diagrammes respectifs des contributions $cnt(f^{\alpha})$ et $cntV(f^{\alpha})$ des composantes à la variabilité spatiale des données et à la variance des données.

Les q premières composantes retenues dans la relation (**20**) sont appelées composantes locales car elles rendent compte de la structure des données à petite échelle, alors que les p premières composantes retenues dans la relation (**21**) sont appelées composantes régionales car elles traduisent la structure des données à grande échelle.

Certaines composantes peuvent être à la fois régionales et locales. Les composantes $f^{\alpha}$ rangées en dernière position à la fois dans les relations (**20**) et (**21**) i.e. pour lesquelles on a à la fois $cnt(f^{\alpha}) \approx 0$ et $cntV(f^{\alpha}) \approx 0$), sont peu intéressantes et on les assimile à du bruit aléatoire.

La part de la variabilité spatiale des données expliquée par les q premières composantes locales est :

$$S_{locale} = \sum_{k=1}^{q} cnt(f^{\beta(k)}) \qquad (22)$$

La part de la variance des données expliquée par les p premières composantes régionales est :

$$\vartheta_{régionale} = \sum_{k=1}^{p} cntV(f^{\alpha(k)}) \qquad (23)$$

La condition nécessaire pour calculer les contributions cntV($f^\alpha$) pour une famille de composantes factorielles est que celle-ci soit orthogonale.

On ne peut pas réciproquement intégrer la contribution à la variabilité spatiale cnt($g^\alpha$) comme outil d'aide à l'interprétation des composantes de l'analyse en composantes principales ACP. Le calcul de cnt($g^\alpha$) nécessite que les $g^\alpha$ soient spatialement orthonormées (i.e. leurs covariances locales sont nulles deux à deux). Ceci est le cas des composantes de l'ACS mais non de celles de l'ACP.

Les composantes factorielles, à la fois statistiquement orthogonales et spatialement indépendantes, issues de la méthode selon l'invention, permettent de rendre compte des structures spatiales intrinsèques aux données. Une fois mises en évidence, ces structures pourront être utilisées pour décrire finement les images sismiques.

### II-4. Filtrage des variables initiales

On pourra extraire de toute variable initiale $\mathbf{Z}^j$ respectivement une (ou plusieurs) parties régionales $\mathbf{Z}^j_{\text{régionale}}(h)$ qui traduisent des phénomènes spatiaux à grande échelle et une (ou plusieurs) parties locales $\mathbf{Z}^j_{\text{locale}}(h)$ qui traduisent des phénomènes spatiaux à petite échelle. Ces nouvelles variables s'écrivent :

$$\mathbf{Z}^j_{\text{régionale}}(h) = \sum_{\text{comp. régionales } k} r^j_k f^k \qquad (24)$$

et

$$\mathbf{Z}^j_{\text{locale}}(h) = \sum_{\text{comp. locales } k} r^j_k f^k \qquad (25)$$

Les composantes régionales et locales intervenant dans les deux relations (**24**) et (**25**) sont sélectionnées par l'utilisateur sur la base des diagrammes des contributions des composantes spatiales à la variance et à la variabilité spatiale des données.

### Exemple d'application de l'ASC à un jeu de données

Les six images Z1, ..., Z6 sur les Fig.1a à 1f représentent les amplitudes des six horizons d'un bloc sismique. Trois structures sont visibles sur ces images dont certaines sont emboîtées les unes dans les autres: une structure d'orientation Est-Ouest commune aux images Z1, Z2 et Z3, une structure d'orientation Nord-Sud commune aux images Z4, Z et Z6, et du bruit aléatoire mélangé avec les deux structures Nord- Est et Est-Ouest principalement dans les images Z2, Z4 et Z6. Les structures Est-Ouest et Nord-Sud sont des organisations spatiales à grande échelle alors que le bruit aléatoire apparaît plutôt à plus petite échelle.

Par ailleurs, bien que structurellement ressemblantes les unes avec les autres, les images Z1, Z2 et Z3 (respectivement Z4, Z5 et Z6) sont faiblement corrélées les unes avec les autres à cause des décalages apparents des lentilles composant chacune des images comme le montre le tableau des corrélations ci-dessous. Cette faible corrélation rend la séparation de ces structures difficile -voire impossible- par une méthode multivariable classique (telle que l'ACP) basée sur les seules corrélations entre les variables.

|      | Z1    | Z2    | Z3    | Z4    | Z5    | Z6    |
|------|-------|-------|-------|-------|-------|-------|
| Z1   | 1.00  | -0.26 | 0.11  | -0.11 | 0.05  | -0.02 |
| Z2   | -0.26 | 1.00  | 0.14  | 0.27  | 0.07  | 0.41  |
| Z3   | 0.11  | 0.14  | 1.00  | -0.05 | 0.13  | 0.00  |
| Z4   | -0.11 | 0.27  | -0.05 | 1.00  | -0.15 | 0.17  |
| Z5   | 0.05  | 0.07  | 0.13  | -0.15 | 1.00  | 1.00  |
| Z6   | -0.02 | 0.41  | 0.00  | 0.17  | 0.02  | 1.00  |

Les variogrammes des six images dans huit directions (Nord-Sud, N220, N450, N670, Est-Ouest, N67E, N45E et N22E) sont représentés sur les Fig.2a à 2h. Certaines directions (N450 et N45E) ne permettent pas de distinguer les six images les unes par rapport aux autres, alors que les directions Nord-Est et Est-Ouest séparent mieux les courbes en montrant deux familles de comportements spatiaux homogènes et bien séparés. On voit apparaître les périodicités des événements horizontaux (images Z1,Z2 et Z3) et verticaux (Z4, Z5 et Z6) sur les variogrammes correspondants. Ces variogrammes donnent même une mesure de cette périodicité ($\approx$ 35 mètres).

On peut aussi noter que le saut au voisinage de l'origine (tous variogrammes confondus) est différent d'une image à l'autre. Celles-ci sont ordonnées par ordre croissant de la valeur à l'origine comme suit : Z1, Z5, Z3, Z2, Z4 et Z6. C'est précisément dans cet ordre que les images sont rangées des moins bruitées aux plus bruitées.

Si l'on veut appliquer l'ACS dans le but de séparer le bruit spatial des deux autres structures à grandes échelles, sans distinction entre ces deux structures, c'est la distance près de l'origine qu'il faudrait choisir.

Par contre, si ce sont ces deux structures à grande échelle que l'on désire séparer, il faudrait appliquer l'ACS dans la direction Nord-Sud ou Est-Ouest pour une distance de 18 mètres qui correspond à la distance pour laquelle la séparation entre les deux familles d'images est optimale. L'ACS sera appliquée pour la distance de 18 mètres dans la direction Nord-Sud.

On peut noter sur les Fig.3a, 3b qui donnent les valeurs propres, et les diagrammes de contributions à la variabilité spatiale et à la variance des 6 composantes spatiales, que les composantes présentent des valeurs de contributions à la variance à peu près équivalentes. C'est alors le critère de variabilité spatiale qui est pertinent pour distinguer les composantes spatiales les unes des autres. Celui-ci met en évidence les composantes F4, F5 et F6 comme significatives.

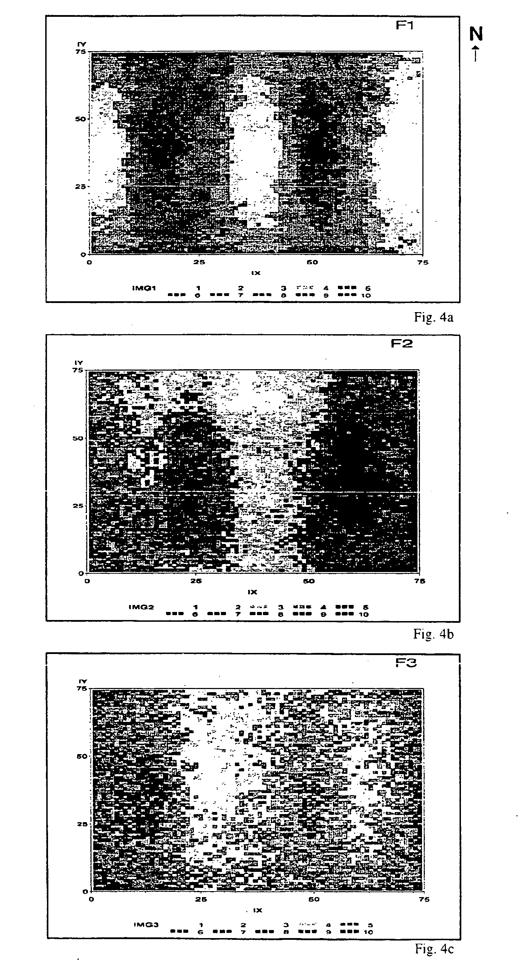

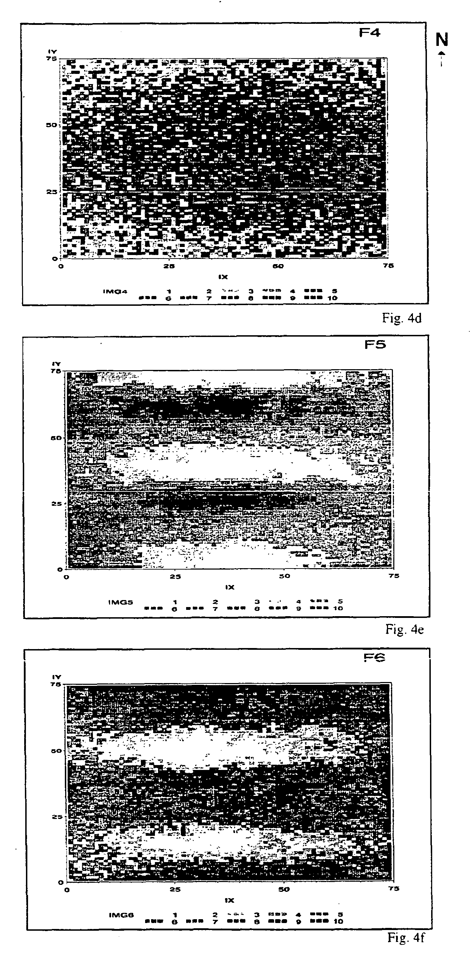

Les composantes F5 et F6 (Fig.4e et 4f) mettent en évidence les structures Est-Ouest, alors que F1 et F2 (Fig. 4a, 4b) mettent en évidence les structures Nord-Sud. La composante F3 (Fig.4c) mélange la structure Nord-Sud avec le bruit aléatoire. La composante F4 (Fig.4d) capture le bruit aléatoire et le sépare tout à fait des autres structures.

Les types de graphiques sur les Fig.5a à 5e et les Fig.6a à 6e (corrélations et contributions à la variabilité spatiale des variables) permettent de positionner les images initiales par rapport aux composantes spatiales. Ce positionnement joue un rôle d'interprétation des données (initiales et composantes) les unes par rapport aux autres. C'est ainsi que les plans factoriels (F5-F6), aussi bien pour les corrélations (Fig.5a-5e) que pour les contributions (Fig.6a-6e) montrent que les composantes F5 et F6 sont fortement corrélées avec (et contribuent fortement aux) images Z1, Z2 et Z3. De même, on peut voir grâce à la composante spatiale F4, la forte variabilité spatiale des images Z2, Z4 et Z6.

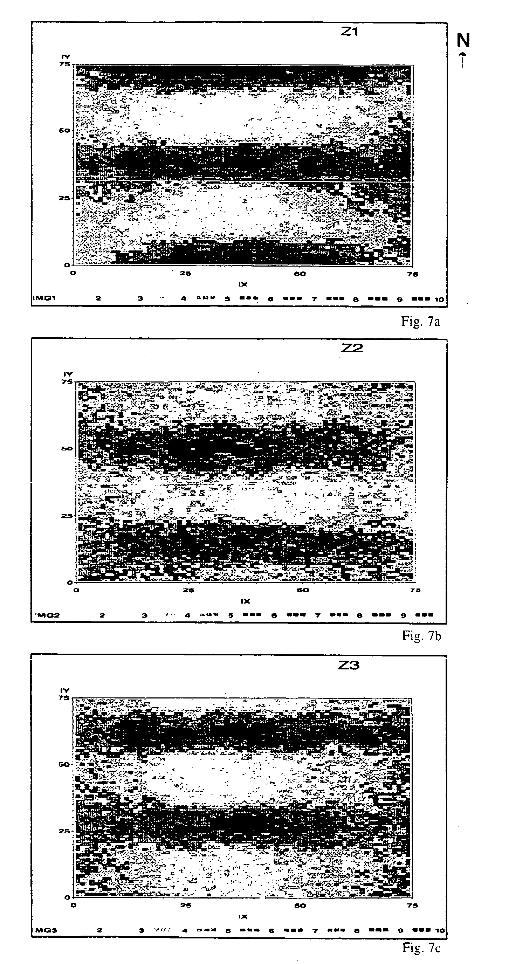

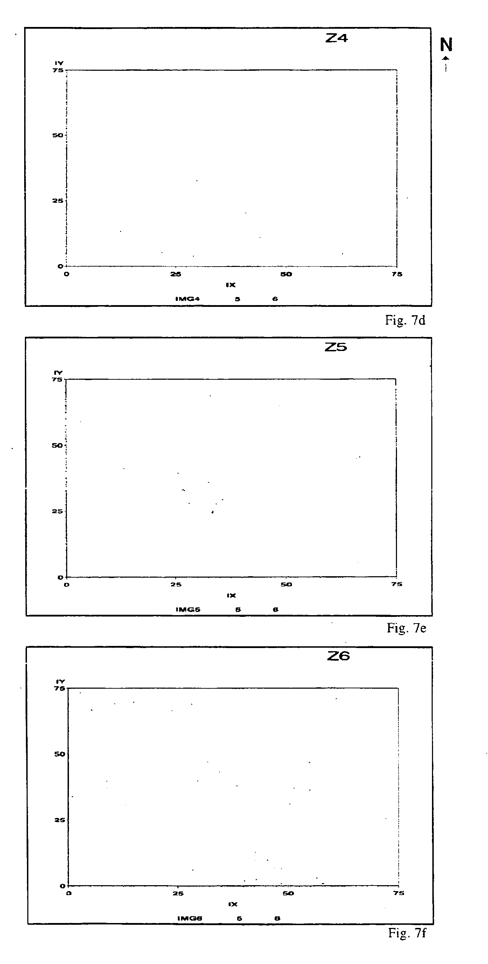

La structure composante F5-F6 correspond à la structure spatiale Est-Ouest. Celle-ci est principalement contenue dans les images Z1, Z2 et Z3 (Fig.7a-7c). Les images des Fig.7a à 7f correspondent à l'extraction de cette structure, des images initiales. On remarque que celles qui la contiennent (Z1, Z2 et Z3) en restituent une grande part, alors que les autres (Z4, Z5 et Z6) n'en fournissent qu'une quantité pratiquement négligeable (Fig.7d à 7f).

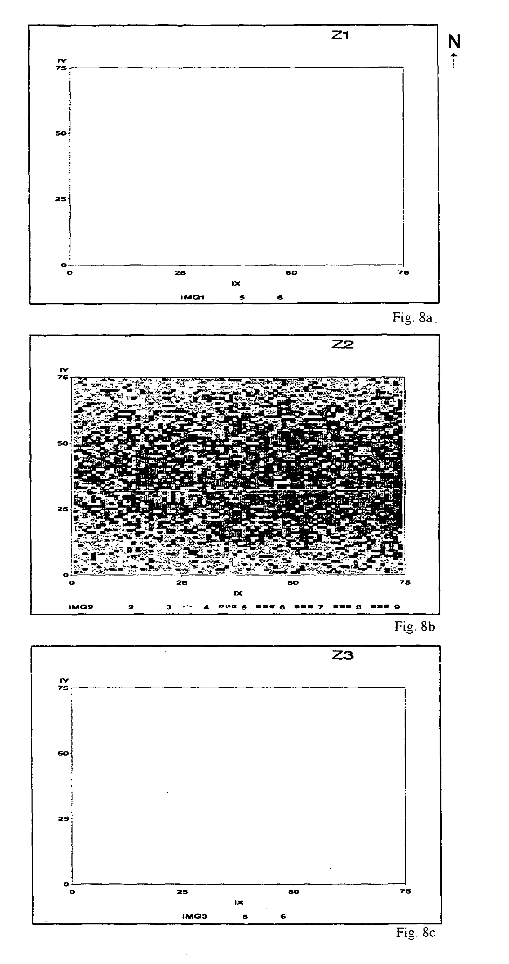

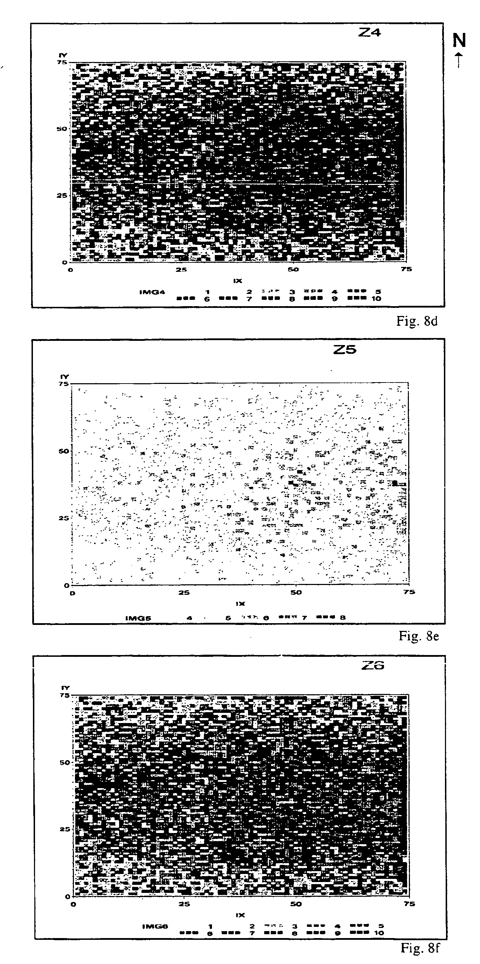

La structure F4 correspond au bruit aléatoire. Les images des Fig.8a à 8f visualisent ce bruit contenu dans chacune des images initiales, principalement dans les images Z2, Z4 et Z6 (respectivement Fig.8b, 8d et 8f).

Le tableau ci-dessous donne les valeurs des pourcentages de variabilité spatiale (cnt) et de variance (cnV) des structures composantes F5-F6 et F4 contenues dans les images initiales. Ces valeurs permettent de sélectionner les images initiales en fonction des structures composantes mises en évidence.

|  | Extraction de la structure composante F5-F6 | | Extraction de la structure composante F4 | |
|---|---|---|---|---|
|  | % de cnt | % de cntV | % de cnt | % de cntV |
| Z1 | 90% | 69% | 1% | 1 % |
| Z2 | 78% | 62% | 19% | 28 % |
| Z3 | 88% | 65% | 1% | 2% |
| Z4 | 1% | 0% | 75% | 46% |
| Z5 | 3% | 1 % | 19% | 9% |
| Z6 | 2 % | 1% | 76 % | 53% |

On a décrit des exemples d'application de la méthode à la caractérisation d'un volume du sous-sol. Il est bien évident cependant que la méthode peut s'appliquer plus généralement à la caractérisation de toutes données spatiales, où l'on a à traiter d'unités reliées entre elles par des graphes de continuité spatiale. La méthode peut trouver des applications par exemple et de façon non limitative, dans toutes les géosciences, notamment en géographie, agronomie, hydrologie, géomarketing, etc.

Dans les exemples qui ont été décrits, on a considéré des objets (éléments d'image) qui ont une répartition spatiale régulière. Il est bien évident cependant que la méthode s'applique à des objets présentant une répartition spatiale quelconque.

**Revendications**

1. Méthode statistique multivariable pour analyser des données spatiales associées à des éléments d'images, lesdites données étant constituées par des mesures considérées comme des variables statistiques et présentant des structures spatiales traduisant des événements d'un milieu complexe tel que le sous-sol, ces données étant obtenues par une exploration du milieu, de manière à identifier et extraire les structures spatiales des données ladite méthode comportant les étapes suivantes :

   on effectue une analyse spatiale des données à l'aide d'une étude variographique pour déterminer, dans plusieurs directions de l'espace, au moins des distances spatiales (h) caractérisant la variabilité spatiale ($\Gamma_{ZZ}$(h) des variables statistiques ($Z^J$);
   on réalise une analyse de la contiguïté spatiale consistant à déterminer une décomposition des données en composantes spatiales ($f^1$,.....,$f^J$), chaque composante spatiale consistant en des combinaisons linéaires de variables statistiques ($Z^J$) qui possèdent, à la fois, une variabilité spatiale minimale et une variance maximale;
   on sélectionne les composantes spatiales les plus significatives en prenant en compte leurs contributions respectives à la variabilité spatiale des données et à la variance des données ; et
   on réalise un filtrage des variables statistiques à partir des composantes spatiales sélectionnées pour extraire au moins une structure spatiale.

2. Méthode selon la revendication 1, dans laquelle on sélectionne des composantes spatiales en déterminant, parmi toutes les composantes spatiales, des composantes spatiales locales à partir de leur contribution à la variabilité spatiale des données, pour rendre compte de la structure des données à petite échelle, et des composantes spatiales régionales à partir de leur contribution à la variance des données, pour rendre compte de la structure des données à grande échelle.

3. Méthode selon la revendication 2, dans laquelle on détermine les composantes spatiales locales en classant les composantes spatiales par ordre décroissant de leur contribution à la variabilité spatiale des données.

4. Méthode selon la revendication 2, dans laquelle on détermine les composantes spatiales régionales en classant les composantes spatiales par ordre décroissant de leur contribution à la variance des données.

5. Méthode selon l'une des revendications précédentes, dans laquelle on sélectionne des composantes spatiales de façon graphique.

6. Méthode selon l'une des revendications précédentes, dans laquelle on enlève un bruit et l'on élimine ou l'on conserve au moins une structure spatiale, à l'aide dudit filtrage des variables statistiques.

7. Méthode selon l'une des revendications précédentes, **caractérisée en ce qu'**elle comporte une quantification des composantes spatiales sélectionnées à la fois en termes de variabilité spatiale et de variance.

8. Méthode selon l'une des revendications précédentes, dans laquelle la décomposition est la décomposition pour laquelle les combinaisons linéaires des variables statistiques minimisent un coefficient de contiguïté défini comme le rapport de la variabilité spatiale à la variance.

9. Méthode selon l'une des revendications précédentes, dans laquelle l'étude variographique comporte la détermination d'au moins l'une des propriétés spatiales suivantes : l'organisation spatiale des éléments à différentes échelles, l'importance d'un bruit aléatoire dans les images, l'existence éventuelle de structures périodiques.

10. Méthode selon l'une des revendications précédentes, dans laquelle l'étude variogaphique comporte une analyse variographique monovariable des éléments d'image.

11. Méthode selon l'une des revendications précédentes, dans laquelle l'étude variographique comporte une analyse variographique bivariable des éléments d'image.

**12.** Application de la méthode selon l'une des revendications précédentes à l'analyse de données spatiales à répartition régulière ou irrégulière.

## Claims

**1.** A multivariable statistical method for analysing spatial data associated with image elements, said data being constituted by measurements considered as statistical variables and having spatial structures which translate events from a complex environment such as the subsurface, this data being obtained by an exploration of the environment, so as to identify and extract the spatial structures from the data, said method comprising the following steps:

a spatial analysis of the data is carried out using a variographic study, in order to determine, in several spatial directions, at least spatial distances (h) characterising the spatial variability ($\Gamma_{zz}$ (h)) of the statistical variables ($Z^j$);
a spatial contiguity analysis is effected, which consists of determining a breakdown of the data into spatial components ($f^1$, ..., $f^J$), each spatial component consisting of linear combinations of statistical variables ($Z^J$) which have both a minimum spatial variability and a maximum variance;
the most significant spatial components are selected by taking into consideration their respective contributions to the spatial variability of the data and to the variance of the data; and
filtering of the statistical variables is effected based on the spatial components selected, in order to extract at least one spatial structure.

**2.** The method according to Claim 1, in which spatial components are selected by determining, amongst all of the spatial components, local spatial components, based on their contribution to the spatial variability of the data, in order to report the structure of the small-scale data, and regional spatial components, based on their contribution to the variance of the data, in order to report the structure of the large-scale data.

**3.** The method according to Claim 2, in which the local spatial components are determined by classifying the spatial components in descending order of their contribution to the spatial variability of the data.

**4.** The method according to Claim 2, in which the regional spatial components are determined by classifying the spatial components in descending order of their contribution to the variance of the data.

**5.** The method according to one of the preceding claims, in which spatial components are graphically selected.

**6.** The method according to one of the preceding claims, in which a noise is removed and at least one spatial structure is eliminated or retained, using said filtering of the statistical variables.

**7.** The method according to one of the preceding claims, **characterised in that** it comprises a quantification of the spatial components selected, both in terms of spatial variability and in terms of variance.

**8.** The method according to one of the preceding claims, in which the breakdown is the breakdown for which the linear combinations of the statistical variables minimise a contiguity coefficient defined as the ratio of the spatial variability to the variance.

**9.** The method according to one of the preceding claims, in which the variographic study comprises the determination of at least one of the following spatial properties: the spatial organisation of the elements on different scales, the significance of a random noise in the images, the possible existence of periodic structures.

**10.** The method according to one of the preceding claims, in which the variographic study comprises a monovariable variographic analysis of the image elements.

**11.** The method according to one of the preceding claims, in which the variographic study comprises a bivariable variographic analysis of the image elements.

**12.** Application of the method according to one of the preceding claims to the analysis of spatial data with regular or irregular distribution.

**Patentansprüche**

1. Multivariable statistische Methode zur Analyse der Raumdaten in Verbindung mit Bildelementen, wobei die Daten von Maßen, die als statistische Variable betrachtet werden, gebildet sind und Raumstrukturen aufweisen, die Ereignisse eines komplexen Mediums, wie beispielsweise des Untergrundes, darstellen, wobei diese Daten durch eine Erkundung des Mediums erhalten werden, um die Raumstrukturen der Daten zu identifizieren und extrahieren, wobei diese Methode die folgenden Schritte umfasst:

    Durchführung einer Raumanalyse der Daten mit Hilfe einer variografischen Studie, um in mehreren Richtungen des Raums mindestens Raumdistanzen (h) zu bestimmen, die die räumliche Variabilität ($\sqrt{zz}$(h)) der statistischen Variablen ($Z^3$) kennzeichnen;
    Durchführung einer Analyse des räumlichen Aneinandergrenzens, die darin besteht, eine Zerlegung der Daten in räumliche Komponenten ($f^1$,... $f^3$) zu bestimmen, bestehend in linearen Kombinationen von statistischen Variablen ($Z^3$), die sowohl eine minimale räumliche Variabilität als auch eine maximale Varianz aufweisen;
    Auswahl der signifikantesten räumlichen Komponenten unter Berücksichtigung ihrer jeweiligen Beiträge zur räumlichen Variabilität der Daten und zur Varianz der Daten; und
    Durchführung einer Filterung der statistischen Variablen aus den ausgewählten räumlichen Komponenten, um mindestens eine Raumstruktur zu extrahieren.

2. Methode nach Anspruch 1, bei der räumliche Komponenten ausgewählt werden, wobei unter allen räumlichen Komponenten lokale räumliche Komponenten ausgehend von ihrem Beitrag zur räumlichen Variabilität der Daten bestimmt werden, um die Struktur der Daten im kleinen Bereich aufzuzeigen, und regionale räumliche Komponenten ausgehend von ihrem Beitrag zur Varianz der Daten bestimmt werden, um die Struktur der Daten im großen Bereich aufzuzeigen.

3. Methode nach Anspruch 2, bei der die lokalen räumlichen Komponenten bestimmt werden, wobei die räumlichen Komponenten in absteigender Reihenfolge ihres Beitrags zur räumlichen Variabilität der Daten eingeteilt werden.

4. Methode nach Anspruch 2, bei der die regionalen räumlichen Komponenten bestimmt werden, wobei die räumlichen Komponenten in absteigender Reihenfolge ihres Beitrags zur Varianz der Daten eingeteilt werden.

5. Methode nach einem der vorhergehenden Ansprüche, bei der räumliche Komponenten auf grafische Weise ausgewählt werden.

6. Methode nach einem der vorhergehenden Ansprüche, bei der ein Geräusch entfernt und mindestens eine Raumstruktur mit Hilfe der Filterung der statistischen Variablen beseitigt oder bewahrt wird.

7. Methode nach einem der vorhergehenden Ansprüche, **dadurch gekennzeichnet, dass** sie eine Quantifizierung der ausgewählten räumlichen Komponenten sowohl im Hinblick auf die räumliche Variabilität als auch auf die Varianz umfasst.

8. Methode nach einem der vorhergehenden Ansprüche, bei der die Zerlegung jene Zerlegung ist, bei der die linearen Kombinationen der statistischen Variablen einen Angrenzungskoeffizienten minimieren, der als das Verhältnis der räumlichen Variabilität zur Varianz definiert ist.

9. Methode nach einem der vorhergehenden Ansprüche, bei der die variografische Studie die Bestimmung von mindestens einer der folgenden räumlichen Eigenschaften umfasst: räumliche Organisation der Elemente auf verschiedenen Stufen, Stärke eines zufälligen Geräusches in den Bildern, mögliches Vorhandensein von periodischen Strukturen.

10. Methode nach einem der vorhergehenden Ansprüche, bei der die variografische Studie eine monovariable variografische Analyse der Bildelemente umfasst.

11. Methode nach einem der vorhergehenden Ansprüche, bei der die variografische Studie eine bivariable variografische Analyse der Bildelemente umfasst.

12. Anwendung der Methode nach einem der vorhergehenden Ansprüche für die Analyse von räumlichen Daten mit regelmäßiger oder unregelmäßiger Verteilung.

Fig.1a

Z1

N

Fig.1b

Z2

Fig.1c

Z3

Fig. 1d

Fig. 1e

Fig. 1f

Direction N   –S

Fig. 2a

Direction N22W

Fig. 2b

Direction N45W

Fig. 2c

Direction N67W

Fig. 2d

Direction E-W

Fig. 2e

Direction N67E

Fig. 2f

Direction N45E

Fig. 2g

Direction N22E

Fig. 2h

FIG.3B

FIG.3A

Fig. 4a

Fig. 4b

Fig. 4c

Fig. 4d

Fig. 4e

Fig. 4f

Fig. 5a

Fig. 5b

Fig. 5c

Fig. 5d

Fig. 5e

Fig. 6a

Fig. 6b

Fig. 6c

Fig. 6d

Fig. 6e

Fig. 7a

Fig. 7b

Fig. 7c

Fig. 7d

Fig. 7e

Fig. 7f

Fig. 8a

Fig. 8b

Fig. 8c

Fig. 8d

Fig. 8e

Fig. 8f